# EUROPEAN PATENT APPLICATION

(11) **EP 4 672 815 A1**
(43) Date of publication of application: **31.12.2025**
(21) Application number: 23923402.4
(22) Date of filing: 24.02.2023
(51) Int. Cl.: H04W 36/00

(54) **COMMUNICATION METHOD AND APPARATUS, DEVICE, CHIP, STORAGE MEDIUM, COMPUTER PROGRAM PRODUCT, AND COMPUTER PROGRAM**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); DU, Zhongda, Dongguan, Guangdong 523860 (CN); SHI, Cong, Dongguan, Guangdong 523860 (CN)
(74) Representative: Penza, Giancarlo
(86) International application number: PCT/CN2023/078136
(87) International publication number: WO 2024/174226

(57) **Abstract**

The present application discloses a communication method and apparatus, a chip, a storage medium, a computer program product, and a computer program. The method includes that: a first communication device transmits first information to a second communication device. The first information implicitly indicates first trajectory information of the first communication device within a first time period, and the first trajectory information is configured to determine at least one target candidate cell.

## Description

### TECHNICAL FIELD

Embodiments of the disclosure relate to the technical field of communications, and in particular to a communication method, apparatus, and device, a chip, a storage medium, a computer program product, and a computer program.

### BACKGROUND

In the related art, when communication between a terminal device and a source network device needs to be handed over to communication between the terminal device and a target network device due to poor communication conditions or other reasons, the source network device usually needs to configure target candidate cell(s) to complete the handover from the source network device to the target network device. However, the configuration of the target candidate cell(s) by the source network device may suffer from the following drawbacks. On the one hand, the configuration of the target candidate cell(s) by the source network device is not precise. On the other hand, the process of configuring the target candidate cell(s) by the source network device may raise problems related to user privacy and security. Therefore, how to achieve precise configuration of the target candidate cell(s) by the source network device while ensuring user privacy and security is a problem that urgently needs to be solved.

### SUMMARY

The embodiments of the disclosure provide a communication method and apparatus, a chip, a storage medium, a computer program product, and a computer program, which can achieve precise configuration of target candidate cell(s) by a second communication device while ensuring user privacy and security.

In a first aspect, an embodiment of the disclosure provides a communication method, applied to a first communication device, and including the following operation.

First information is transmitted to a second communication device. The first information implicitly indicates first trajectory information of the first communication device within a first time period, and the first trajectory information is configured to determine at least one target candidate cell.

In a second aspect, an embodiment of the disclosure provides a communication method, applied to a second communication device, and including the following operation.

First information is received from a first communication device. The first information implicitly indicates first trajectory information of the first communication device within a first time period, and the first trajectory information is configured to determine at least one target candidate cell.

In a third aspect, an embodiment of the disclosure provides a communication apparatus, applied to a first communication device, and including a first transceiver unit.

The first transceiver unit is configured to transmit first information to a second communication device. The first information implicitly indicates first trajectory information of the first communication device within a first time period, and the first trajectory information is configured to determine at least one target candidate cell.

In a fourth aspect, an embodiment of the disclosure provides a communication apparatus, applied to a second communication device, and including a second transceiver unit.

The second transceiver unit is configured to receive first information from a first communication device. The first information implicitly indicates first trajectory information of the first communication device within a first time period, and the first trajectory information is configured to determine at least one target candidate cell.

In a fifth aspect, an embodiment of the disclosure provides a communication device, including a processor and a memory configured to store a computer program. The processor is configured to call and run the computer program stored in the memory, to perform the communication method described in the first aspect or the second aspect above.

In a sixth aspect, an embodiment of the disclosure provides a chip, configured to implement the communication method described in the first aspect or the second aspect above.

Specifically, the chip includes a processor configured to call and run a computer program from a memory, causing a device equipped with the chip to perform the communication method described in the first aspect or the second aspect above.

In a seventh aspect, an embodiment of the disclosure provides a computer-readable storage medium, having stored thereon a computer program, and the computer program, when executed by at least one processor, performs the communication method described in the first aspect or the second aspect above.

In an eighth aspect, an embodiment of the disclosure provides a computer program product, including a computer program instruction, causing a computer to perform the communication method described in the first aspect or the second aspect above.

In a ninth aspect, an embodiment of the disclosure provides a computer program that, when run on a computer, causes the computer to perform the communication method described in the first aspect or the second aspect above.

The embodiment of the disclosure provides a communication method, in which a first communication device (e.g., a terminal device) may transmit first information to a second communication device (e.g., a network device). The first information implicitly indicates first trajectory information of the first communication device within a first time period, and the first trajectory information is configured to determine at least one target candidate cell. In this way, the first communication device implicitly informs the second communication device of the first trajectory information, ensuring user privacy and security. Further, after receiving the first information, the second communication device can achieve precise configuration of the target candidate cell(s) based on the first trajectory information of the first communication device.

### BRIEF DESCRIPTION OF THE DRAWINGS

The drawings described herein are intended to provide a further understanding of the disclosure, and constitute a part of the disclosure. The illustrative embodiments of the disclosure and their descriptions are used to explain the disclosure, and do not constitute an undue limitation of the disclosure. In the drawings:
FIG. 1 illustrates a schematic flowchart of a handover between a terminal device and network devices.
FIG. 2 illustrates another schematic flowchart of a handover between a terminal device and network devices.
FIG. 3 illustrates a schematic flowchart of a communication method according to an embodiment of the disclosure.
FIG. 4 illustrates a detailed schematic flowchart of a communication method according to an embodiment of the disclosure.
FIG. 5 illustrates another detailed schematic flowchart of a communication method according to an embodiment of the disclosure.
FIG. 6 illustrates yet another detailed schematic flowchart of a communication method according to an embodiment of the disclosure.
FIG. 7 illustrates still yet another detailed schematic flowchart of a communication method according to an embodiment of the disclosure.
FIG. 8 is a schematic diagram of a composition structure of a communication apparatus according to an embodiment of the disclosure.
FIG. 9 is another schematic diagram of a composition structure of a communication apparatus according to an embodiment of the disclosure.
FIG. 10 is a schematic structural diagram of a communication device according to an embodiment of the disclosure.
FIG. 11 is a schematic structural diagram of a chip according to an embodiment of the disclosure.
FIG. 12 is a schematic block diagram of a communication system according to an embodiment of the disclosure.

### DETAILED DESCRIPTION

In order to provide a more detailed understanding of features and technical content of the embodiments of the disclosure, the implementation of the embodiments of the disclosure is described in detail below in combination with the drawings. The attached drawings are for illustrative purposes only and are not intended to limit the embodiments of the disclosure.

Unless otherwise defined, all technical and scientific terms used in the disclosure have the same meanings as commonly understood by those skilled in the art to which the disclosure belongs. The terms used in the disclosure are only for the purpose of describing the embodiments of the disclosure and are not intended to limit the disclosure.

In the following description, reference is made to "some embodiments", which describe a subset of all possible embodiments. However, it may be understood that "some embodiments" may refer to the same subset or different subsets of all possible embodiments, and may be combined with each other without conflict.

It should be further noted that the terms "first/second/third" used in the embodiments of the disclosure are only intended to distinguish similar objects and do not imply any specific order of such objects. It may be understood that "first/second/third" may be interchanged in a specific order or sequence where allowed, so that the embodiments of the disclosure described herein may be implemented in an order other than that illustrated or described herein.

Furthermore, the term "and/or" in the embodiments of the disclosure is merely an association relationship describing association objects, and indicates that there may be three relationships. For example, A and/or B may indicate three cases: existence of A alone, existence of A and B simultaneously, and existence of B alone. Furthermore, the character "/" herein generally indicates that association objects before and after are in an "or" relationship. It should be further understood that the expression "indicate" mentioned in the embodiments of the disclosure may be a direct indication or an indirect indication, or may indicate that there is an association relationship. For example, A indicates B, which may indicate that A indicates B directly (e.g. B may be obtained through A), or may indicate that A indicates B indirectly (e.g. A indicates C, and B may be obtained through C), or may indicate that there is an association relationship between A and B.

The technical solutions in the embodiments of the disclosure may be applied to various communication systems, such as Long Term Evolution (LTE) systems, LTE Time Division Duplex (TDD), Universal Mobile Telecommunication Systems (UMTSs), Internet of Things (IoT) systems, Narrow Band Internet of Things (NB-IoT) systems, enhanced Machine-Type Communications (eMTC) systems, 5G communication systems (also referred to as New Radio (NR) communication systems), or future communication systems, etc.

It should be noted that the first communication device and the second communication device are mentioned multiple times in the following embodiments. It should be understood that the first communication device may be a terminal device or another device. The second communication device may be a network device or another device. That is to say, the communication system in the embodiments of the disclosure may be located in terminal device/network device scenarios, sidelink coverage scenarios, or other scenarios, which are not limited in the embodiments of the disclosure.

The network device may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN), or the network device may be a relay station, access point, vehicle-mounted device, wearable device, hub, switch, bridge, router, or a network device in a future evolutional Public Land Mobile Network (PLMN), etc.

The terminal device may refer to an access terminal, user equipment (UE), user unit, user station, mobile station, mobile terminal, remote station, remote terminal, mobile device, user terminal, terminal, wireless communication device, user agent, or user apparatus. The access terminal may be a cellular phone, cordless phone, Session Initiation Protocol (SIP) phone, IoT device, satellite handheld terminal, Wireless Local Loop (WLL) station, Personal Digital Assistant (PDA), handheld device with wireless communication capabilities, computing device or other processing device connected to a wireless modem, vehicle-mounted device, wearable device, terminal device in a 5G network, or terminal device in a future evolution network, etc. The terminal device may be used for Device to Device (D2D) communication.

To facilitate understanding of the technical solutions in the embodiments of the disclosure, the related technologies of the embodiments of the disclosure are described below. The following related technologies, as optional solutions, may be arbitrarily combined with the technical solutions in the embodiments of the disclosure, and all such combinations fall within the scope of protection of the embodiments of the disclosure.

In the following embodiments, taking the first communication device as a terminal device and the second communication device as a network device as an example, a handover process between the terminal device and the network devices in an existing wireless communication system is described.

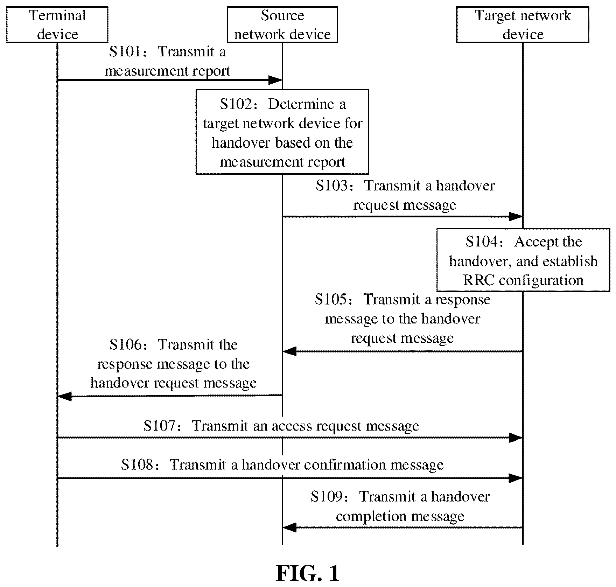

As an example, as shown in FIG. 1, a handover process between a terminal device and network devices may include the following operations S101 to S109.

At S101, the terminal device transmits a measurement report to a source network device.

The measurement report is configured for the source network device to determine a target network device for hangover, thereby enabling the communication between the terminal device and the source network device to be handed over to the communication between the terminal device and the target network device.

At S102, the source network device determines a target network device for handover based on the measurement report.

It should be understood that the target network device is unique. That is to say, the source network device may determine one target network device for handover based on the measurement report.

At S103, the source network device transmits a handover request message to the target network device.

The handover request message is configured to request whether the target network device can serve as a new source network device, thereby achieving communication with the terminal device.

At S104, the target network device accepts the handover, and establishes Radio Resource Control (RRC) configuration.

It should be understood that the target network device accepting the handover indicates that the target network device has determined that it can serve as the new source network device to communicate with the terminal device.

At S105, the target network device transmits a response message to the handover request message to the source network device.

The response message to the handover request message indicates that the target network device can serve as the new source network device to communicate with the terminal device.

At S106, the source network device transmits the response message to the handover request message to the terminal device.

At S107, the terminal device transmits an access request message to the target network device.

The access request message is configured to establish communication between the target network device (i.e., the new source network device) and the terminal device.

At S108, the terminal device transmits a handover confirmation message to the target network device.

The handover confirmation message is configured to confirm that the communication between the target network device and the terminal device has been successfully established.

At S109, the target network device transmits a handover completion message to the source network device.

The handover completion message is configured for the target network device to inform the source network device that the communication between the terminal device and the target network device has been successfully established.

Based on the aforementioned handover process between the terminal device and the network devices, after the terminal device transmits (S101) the measurement report to the source network device and before the terminal device receives (106) the response message to the handover request message transmitted by the source network device, a time interval is required. This time interval includes the time required for the source network device to transmit the handover request message and wait for the response from the target network device (S102~S105). Furthermore, the signaling interaction (S101, S106) between the terminal device and the source network device also requires a time interval. The existence of the two time intervals mentioned above may cause the terminal device to be unable to receive the handover command due to poor communication conditions when the source network device transmits (S106) the handover command to the UE, resulting in handover failure and preventing successful establishment of the communication between the target network device and the terminal device.

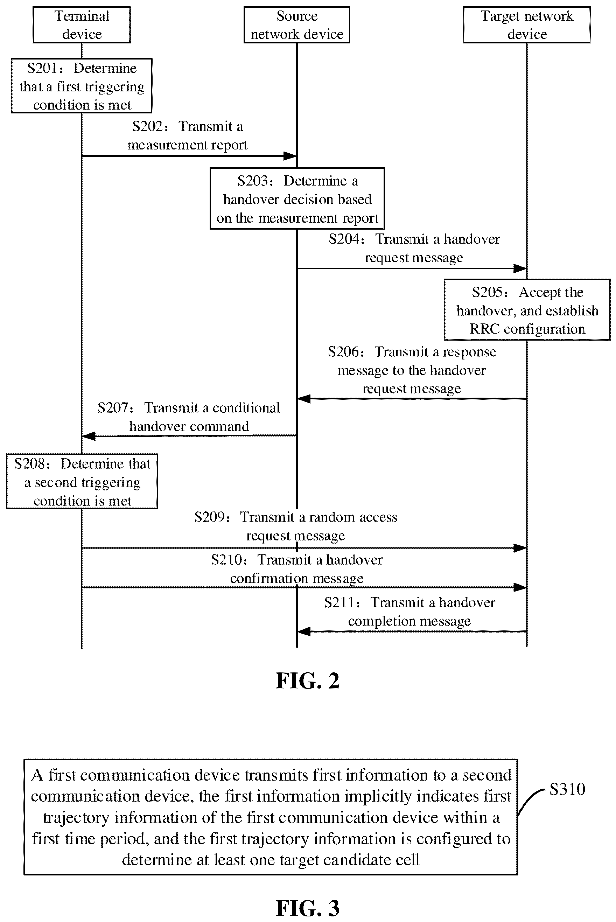

As another example, in response to the problem in the previous example, the 3rd Generation Partnership Project (3GPP) proposed a conditional handover mechanism and introduced a first triggering condition and a second triggering condition. As shown in FIG. 2, another handover process between a terminal device and network devices may include the following operations S201 to S211.

At S201, the terminal device determines that a first triggering condition is met.

The first triggering condition is configured to trigger the terminal device to report a measurement report and to trigger a source network device to prepare for handover.

Exemplarily, the first triggering condition may be whether signal strength of the signal transmitted between the terminal device and the source network device is less than a certain threshold. For example, if the threshold is -60, the terminal device may determine that the first triggering condition is met when the strength of signal transmitted between the terminal device and the source network device is less than -60dB.

At S202, the terminal device transmits a measurement report to a source network device.

The measurement report is configured for the source network device to determine at least one target network device for hangover, thereby enabling the communication between the terminal device and the source network device to be handed over to the communication between the terminal device and the target network device.

At S203, the source network device determines a handover decision based on the measurement report.

It should be understood that the handover decision is configured to determine at least one target network device. That is to say, the source network device may determine at least one target network device for handover based on the measurement report.

At S204, the source network device transmits a handover request message to the at least one target network device.

The handover request message is configured to request the target network device to determine whether the target network device can serve as a new source network device, thereby implement communication with the terminal device.

It should be understood that since there may be more than one target network device, the source network device needs to transmit the handover request message to each target network device.

At S205, the at least one target network device accepts the handover, and establishes RRC configuration.

It should be understood that the target network device accepting the handover indicates that the target network device has determined that it can serve as the new source network device to communicate with the terminal device.

It should be further understood that since there may be more than one target network device, there may also be more than one target network device accepting the handover.

At S206, the at least one target network device transmits a response message to the handover request message to the source network device.

The response message to the handover request message indicates that the target network device can serve as the new source network device to communicate with the terminal device.

It should be understood that since there may be more than one target network device, there may also be more than one target network device that transmit the message to the source network device.

At S207, the source network device transmits a conditional handover command to the terminal device.

The conditional handover command may include a second triggering condition. The second triggering condition may be whether the signal strength of the signal transmitted between the terminal device and the source network device is less than another threshold.

At S208, the terminal device determines that a second triggering condition is met.

It should be understood that the second triggering condition is configured to trigger the terminal device to initiate a random access to the target network device, in order to establish communication between the target network device (i.e., the new source network device) and the terminal device.

Exemplarily, if the mentioned another threshold is -80, the terminal device may determine that the second triggering condition is met when the strength of the signal transmitted between the terminal device and the source network device is less than -80dB.

At S209, the terminal device transmits a random access request message to the target network device.

The access request message is configured to establish the communication between the target network device and the terminal device.

It should be understood that since there may be more than one target network device, when transmitting the random access request message to the target network device, the terminal device may transmit the random access request message to one of the at least one target network device.

At S210, the terminal device transmits a handover confirmation message to the target network device.

The handover confirmation message is configured to confirm that the communication between the target network device and the terminal device has been successfully established.

At S211, the target network device transmits a handover completion message to the source network device.

The handover completion message is configured for the target network device to inform the source network device that the communication with the terminal device has been successfully established.

It should be noted that the first triggering condition is usually weaker than the second triggering condition. That is to say, the terminal device will first meet the first triggering condition and trigger reporting of the corresponding measurement (S201, S202), thereby triggering the process of handover preparation (S203~S207). After the terminal device determines that the second triggering condition is met (S208), the corresponding operations may be performed (S209-S211), e.g., the terminal device may transmit the access to the target network device, thereby successfully establishing the communication between the target network device and the terminal device.

Based on the above handover process between the terminal device and the network devices, the source network device may determine at least one target candidate cell from the at least one measured cell in conjunction with the network resource configuration situation. However, the above handover process has the following two shortcomings.

On the one hand, for the terminal device, after successfully accessing the target candidate cell, the terminal device may leave the target candidate cell in a very short period of time, in this case, the terminal device needs to re-upload a measurement report to determine a new target candidate cell, thereby reducing the effective data transmission time and throughput of the terminal device. For the network devices, as the terminal device may need to frequently access different target candidate cells, at least one target candidate cell accessed by the terminal device needs to reserve resources for uncertain behaviors of the terminal device to prepare for potential handover, and the reserved resources are much larger than the resources occupied by using the handover process shown in FIG. 1. When network device resources are in shortage, e.g., when network resources are under high load, the substantial reservation of resources may affect the resource utilization rate of the overall system and overall network performance. Furthermore, the signaling interaction between the terminal device and the network devices also increases the interaction signaling overhead, and occupies additional network pre-configured resources.

On the other hand, in Network Energy Saving (NES) scenarios, a cell that is currently in the NES mode may not be detected by the terminal device, resulting in the source network device not configuring the cell as a target candidate cell. If the NES mode cell is about to be activated, the terminal device may miss the opportunity to connect to a cell with a better channel, thereby reducing the achievable throughput of the system. Furthermore, in high dynamic on-off scenarios of network devices, such as Ultra-Dense Network (UDN) scenarios, missing the connection to dynamically activated NES mode cell may greatly affect system performance.

To address the shortcomings in the aforementioned handover process, the source network device may predict trajectory information of the terminal device for a period of time in the future from the current moment when the terminal device meets the first triggering condition, and determine a candidate cell list based on the trajectory information.

Exemplarily, the source network device may utilize location information of the terminal device at the current moment to predict the trajectory information of the terminal device for a period of time in the future from the current moment, thereby assisting in the determination of the target candidate cell(s) of the terminal device. For example, the terminal device may report precise current location coordinates to the source network device. The source network device may input the location coordinates into a pre-trained model to obtain predicted trajectory information of the terminal device for the next 5 seconds, and determine target candidate cell(s) based on the 5-second predicted trajectory information.

However, predicting the trajectory based on the location information of the terminal device at the current moment may result in significant deviations in the predicted trajectory result. For example, the terminal device is at a certain location at the current moment, and the terminal device may move north or south in the next moment. The source network device is likely to misjudge, based on the location information of the terminal device at the current moment, a movement direction of the terminal device for a period of time in the future from the current moment, resulting in erroneous predicted trajectory direction. Consequently, at least one target candidate cell determined by the source network device may fail to meet the conditional handover requirements. Furthermore, although it can improve the accuracy of trajectory predicted by the source network device if the terminal device directly reports the precise location information at the current moment to the source network device, it also raises problems related to user privacy and security. Usually, the terminal device does not inform other devices (e.g., other terminal devices or the source network device) of the precise location information of the terminal device at the current moment. Therefore, how to achieve precise configuration of the target candidate cell(s) by the source network device while ensuring user privacy and security is a problem that urgently needs to be solved.

Based on this, an embodiment of the disclosure provides a communication method, in which a first communication device (e.g., a terminal device) may transmit first information to a second communication device (e.g., a network device). The first information implicitly indicates first trajectory information of the first communication device within a first time period, and the first trajectory information is configured to determine at least one target candidate cell. In this way, the first communication device implicitly informs the second communication device of the first trajectory information, ensuring user privacy and security. Further, after receiving the first information, the second communication device can achieve precise configuration of the target candidate cell(s) based on the first trajectory information of the first communication device.

It should be noted that compared with previous wireless communication systems, the current wireless communication systems provide greater flexibility and emphasize extensive applicability to different scenarios and full utilization of limited resources. However, considering that the basic principles of most current work are still based on theoretical modeling of the actual communication environment or simple parameter selection, the gains brought by this basic working method are gradually weakening in diverse scenarios and complex communication environments, such as the conditional handover-related technical solutions mentioned in the above embodiments. Based on this situation, it may be necessary to adopt new methods and ideas, and combine the new methods and ideas with traditional wireless communication theories and systems to further improve the performance of wireless communication systems.

In an embodiment of the disclosure, an artificial intelligence (AI) model may be introduced into the handover process between the first communication device and the second communication device.

Exemplarily, the AI model may be a supervised learning model or a reinforcement learning model. The following provides explanations for the supervised learning model and the reinforcement learning model respectively.

The supervised learning, also referred to as learning with supervision or supervisory learn, is an approach in machine learning that involves learning or creating a pattern/function from training data, and inferring new instances based on this pattern/function. The training data consists of input objects (e.g., vectors) and expected outputs. The output of the function may be a continuous value or the prediction of a classification label. A task of a supervised learner is to predict an output of the function for any possible input after observing some pre-labeled training examples (e.g., inputs and expected outputs). To achieve this, the learner must generalize from the existing data to unobserved cases through appropriate means.

The reinforcement learning is a field in machine learning that emphasizes how to act based on the environment to obtain the maximum expected benefit. The reinforcement learning is a third basic machine learning method besides supervised learning and unsupervised learning. Unlike the supervised learning, the reinforcement learning does not require labeled input-output pairs, and does not require precise correction of non-optimal solutions. The focus of the reinforcement learning is to find a balance between exploration (e.g., exploring unknown fields) and utilization (e.g., utilizing existing knowledge). The "exploration-utilization" trade-off in the reinforcement learning has many applications in practical scenarios. In reinforcement learning problems, the environment is typically abstracted as Markov Decision Processes (MDPs), and many reinforcement learning algorithms can only use dynamic programming methods under this assumption. Compared with traditional dynamic programming methods, the reinforcement learning algorithms do not require knowledge about MDP and can be applied to large-scale MDPs where exact methods cannot be found.

In an embodiment of the disclosure, a statistical analysis model may further be introduced into the handover process between the first communication device and the second communication device. The statistical analysis model typically refers to a model established based on probability theory and using mathematical statistical approaches. Some processes cannot be modeled using theoretical analysis approaches, but data may be measured through experiments, and the functional relationships between variables may also be obtained through mathematical statistics to establish the statistical analysis model.

It should be noted that in the following embodiments, the information interaction between the second communication device and the first communication device all takes place during the preparation phase of the conditional handover, and the following embodiments start to be implemented when the first triggering condition for the conditional handover is met, so as not to affect the subsequent conditional handover process and to ensure the continuity of the new and old signaling interactions. For example, as shown in FIG. 2, the information interaction between the second communication device and the first communication device may take place before S204 in FIG. 2, so as not to affect the subsequent conditional handover process from S204 to S211.

It should be further noted that when transmitting the first information to the second communication device, the first communication device may simultaneously transmit the measurement report to the second communication device. When transmitting the first information to the second communication device, the first communication device may not transmit the measurement report to the second communication device. No limits are made thereto in the embodiments of the disclosure.

FIG. 3 is a schematic flowchart of a communication method according to an embodiment of the disclosure. As shown in FIG. 3, the method may include the following operation 310.

At 310, a first communication device transmits first information to a second communication device. The first information implicitly indicates first trajectory information of the first communication device within a first time period, and the first trajectory information is configured to determine at least one target candidate cell.

Correspondingly, the second communication device receives the first information from the first communication device.

It should be noted that the first communication device may be a terminal device, and the second communication device may be a network device. Alternatively, the first communication device may be a first terminal device, and the second communication device may be a second terminal device. No limits are made thereto in the embodiments of the disclosure.

In some embodiments, the first time period may be determined based on at least one of: a start moment, an end moment, or a duration.

It should be noted that the first time period may be a period of time after the current moment, that is to say, the start moment of the first time period is the current moment. The first time period may also be a period of time before a previous moment, that is to say, the end moment of the first time period is a previous moment of the current moment. The start moment and the end moment of the first time period are not limited in the embodiments of the disclosure.

Furthermore, in some embodiments, the start moment of the first time period is not earlier than the current moment. For example, the start moment of the first time period is the current moment.

In some embodiments, the first time period may be determined by the first communication device. Exemplarily, the duration of the first time period may be determined based on at least one of the following:
a movement speed of the first communication device; or
a number of location sampling points of the first communication device.

For example, when the first communication device moves at a speed of 15 kilometers per hour (km/h), the duration of the first time period may be set to 1 minute (min). For another example, when the first communication device moves at a speed of 30km/h, the duration of the first time period may be set to 30 seconds (s).

For another example, the duration of the first time period needs to ensure that at least 10 location sampling points of the first communication device are reported within the first time period.

It should be noted that the trajectory information may include at least one of location information, movement speed information, or movement direction information. In the embodiments of the disclosure, the content of the first trajectory information needs to be determined in conjunction with corresponding application scenarios. In some scenarios, the first trajectory information may include location information. In some other scenarios, the first trajectory information may include location information and movement speed information. In yet some other scenarios, the first trajectory information may include location information and movement direction information. In still yet some other scenarios, the first trajectory information may include location information, movement direction information, and movement speed information.

It should be noted that the first trajectory information may include multiple pieces of location information, which may be location information of the first communication device at different moments within the first time period.

It should be further noted that the first trajectory information may include one piece of movement speed information, which may be an average speed of the first communication device within the first time period. The first trajectory information may also include multiple pieces of movement speed information, which may be instantaneous speeds of the first communication device at different moments within the first time period.

It should be further noted that the first trajectory information may include one piece of movement direction information, which may be a directional movement direction of the first communication device within the first time period. The first trajectory information may also include multiple pieces of movement direction information, which may be non-directional movement directions of the first communication device within the first time period.

It should be understood that the first communication device transmits the first information to the second communication device, and the first information implicitly indicates the first trajectory information of the first communication device within the first time period. It may be understood that the first communication device does not inform the second communication device of precise first trajectory information of the first communication device within the first time period. Instead, the first communication device provides information in an obfuscated form, enabling the second communication device to determine the precise first trajectory information based on the original content of the first information, thereby ensuring user privacy and security.

It should be further understood that compared to the scheme that first information directly indicates location information of the first communication device at the current moment, the scheme that the first information implicitly indicates the first trajectory information of the first communication device within the first time period may enable the second communication device to more accurately configure the target candidate cell(s) based on the first trajectory information implicitly indicated by the first information after receiving the first information.

In some embodiments, the first information may be transmitted through RRC signaling, or through Medium Access Control (MAC) Control Element (CE) signaling, or through control information. The control information may be Uplink Control Information (UCI) or Sidelink Control Information (SCI).

It should be noted that the at least one target candidate cell may form a target candidate cell list, which includes at least one target candidate cell.

The embodiment of the disclosure provides a communication method, in which the first communication device may transmit the first information to the second communication device. The first information implicitly indicates the first trajectory information of the first communication device within the first time period, and the first trajectory information is configured to determine at least one target candidate cell. In this way, the first communication device implicitly informs the second communication device of the first trajectory information, ensuring user privacy and security. Further, after receiving the first information, the second communication device can achieve precise configuration of the target candidate cell(s) based on the first trajectory information of the first communication device.

It should be further noted that before transmitting the first information to the second communication device, the first communication device needs to first determine the first information.

Depending on different ways in which the first communication device determines the first information, the second communication device may determine at least one cell associated with the first communication device within the first time period based on the first information in the following two possible implementations.

In one possible implementation, the first communication device may obtain second information, and determine the first information based on the second information. The second communication device may determine the at least one cell associated with the first communication device within the first time period based on the first information.

The at least one cell includes at least one target candidate cell.

The second information indicates second trajectory information of the first communication device within a second time period.

In some embodiments, the second time period may be determined based on at least one of: a start moment, an end moment, or a duration.

It should be noted that the second time period may be a period of time before the current moment, that is to say, the end moment of the second time period is the current moment. The second time period may also be a period of time before a previous moment, that is to say, the end moment of the second time period is a previous moment of the current moment. The start moment and the end moment of the second time period are not limited in the embodiments of the disclosure.

Furthermore, in some embodiments, the end moment of the second time period is not later than the current moment.

In some embodiments, the second time period may be determined by the first communication device. Exemplarily, the duration of the second time period may be determined based on at least one of the following:
a movement speed of the first communication device; or
a number of location sampling points of the first communication device.

For an exemplary explanation for determining the duration of the second time period, reference may be made to the description of the first time period, which is not repeated herein.

It should be noted that the duration of the second time period may be equal to the duration of the first time period, or the duration of the second time period may not be equal to the duration of the first time period, which is not limited in the embodiments of the disclosure.

In some embodiments, the second trajectory information may include location information.

It should be noted that the second trajectory information may include multiple pieces of location information, which may be location information of the first communication device at different moments within the second time period.

Furthermore, the second trajectory information may further include movement speed information and/or movement direction information.

It should be further noted that the second trajectory information may include one piece of movement speed information, which may be an average speed of the first communication device within the second time period. The second trajectory information may also include multiple pieces of movement speed information, which may be instantaneous speeds of the first communication device at different moments within the second time period.

It should be further noted that the second trajectory information may include one piece of movement direction information, which may be a directional movement direction of the first communication device within the second time period. The second trajectory information may also include multiple pieces of movement direction information, which may be non-directional movement directions of the first communication device within the second time period.

It should be further noted that when the content of the second trajectory information of the first communication device within the second time period is different, the content of the first trajectory information of the first communication device within the first time period will also be different after the first information is determined based on the second information.

Exemplarily, when the second trajectory information of the first communication device within the second time period includes location information of the first communication device within the second time period, after the first information is determined based on the second information, the first trajectory information of the first communication device within the first time period may include location information of the first communication device within the first time period.

Exemplarily, when the second trajectory information of the first communication device within the second time period includes location information and movement speed information of the first communication device within the second time period, after the first information is determined based on the second information, the first trajectory information of the first communication device within the first time period may include location information and movement speed information of the first communication device within the first time period.

Exemplarily, when the second trajectory information of the first communication device within the second time period includes location information and movement direction information of the first communication device within the second time period, after the first information is determined based on the second information, the first trajectory information of the first communication device within the first time period may include location information and movement direction information of the first communication device within the first time period.

Exemplarily, when the second trajectory information of the first communication device within the second time period includes location information, movement speed information, and movement direction information of the first communication device within the second time period, after the first information is determined based on the second information, the first trajectory information of the first communication device within the first time period may include location information, movement speed information, and movement direction information of the first communication device within the first time period.

It should be noted that the second information may be information that the first communication device can directly collect through its own Global Positioning System (GPS) or other sensor devices, without the need for the second communication device to configure corresponding reference signals.

It should be further noted that the first communication device may include a storage unit, which may be configured to store the second information and is capable of continuously updating the second information.

In this possible implementation, depending on different ways of determining the first information based on the second information, the second communication device may determine at least one cell associated with the first communication device within the first time period based on the first information in three schemes (scheme # A ~ scheme # C), which are described in detail with the interaction process between the first communication device and the second communication device.

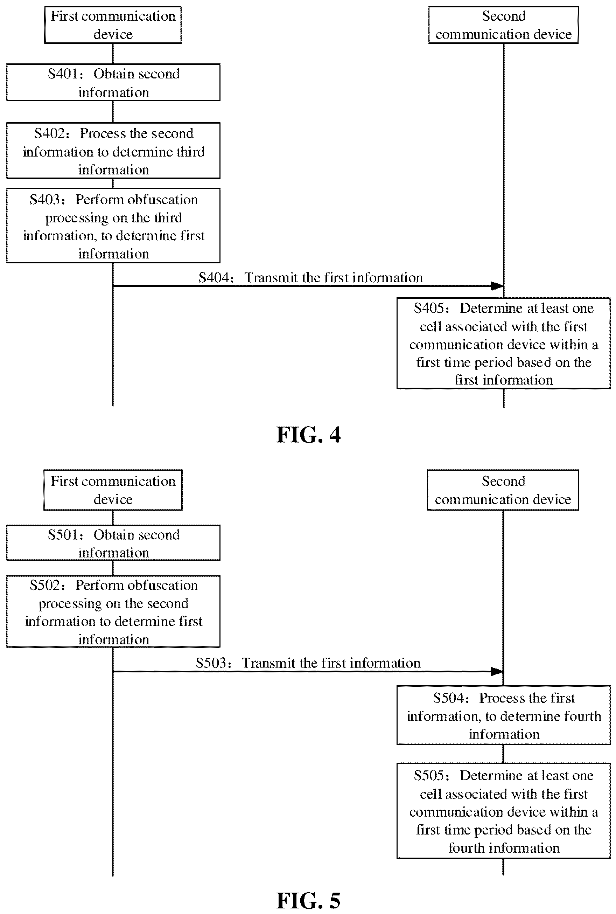

For the scheme # A, FIG. 4 illustrates a detailed schematic flowchart of a communication method according to an embodiment of the disclosure. As shown in FIG. 4, the detailed process of the communication method may include the following operations S401 to S405.

At S401, a first communication device obtains second information.

The second information indicates second trajectory information of the first communication device within a second time period.

At S402, the first communication device processes the second information, to determine third information.

The third information indicates third trajectory information of the first communication device within a first time period.

It should be noted that the third information is predicted third trajectory information of the first communication device within the first time period.

In some embodiments, the third trajectory information may include location information.

It should be noted that the third trajectory information may include multiple pieces of location information, which may be location information of the first communication device at different moments within the first time period.

Furthermore, the third trajectory information may further include movement speed information and/or movement direction information.

It should be further noted that the third trajectory information may include one piece of movement speed information, which may be an average speed of the first communication device within the first time period. The third trajectory information may also include multiple pieces of movement speed information, which may be instantaneous speeds of the first communication device at different moments within the first time period.

It should be further noted that the third trajectory information may include one piece of movement direction information, which may be a directional movement direction of the first communication device within the first time period. The third trajectory information may also include multiple pieces of movement direction information, which may be non-directional movement directions of the first communication device within the first time period.

In some embodiments, the first communication device may process the second information based on a first model, to determine the third information.

The first model may be a pre-trained model.

Furthermore, in some embodiments, the first model may be an AI model.

Exemplarily, the first model may be a supervised learning model or a reinforcement learning model. For example, the first model may be an Encoder-Decoder Long Short Term Memory Networks (LSTM) model. For another example, the first model may be a deep neural network model.

It should be understood that when the first model is the supervised learning model or the reinforcement learning model, the first communication device processes trajectory information (i.e., the second information) of the first communication device within a period of time before the current moment based on the pre-trained first model, and may predict trajectory information (the third information) of the first communication device within a period of time after the current moment.

In some other embodiments, the first model may be a statistical analysis model.

Exemplarily, the statistical analysis model may be an Autoregressive Integrated Moving Average (ARIMA) model.

It should be understood that when the first model is the statistical analysis model, the first communication device may use the pre-trained first model to separately statistically analyze the historical throughput of the interactions between the first communication device and each cell, and predict the trajectory information (the third information) of the first communication device within a period of time after the current moment based on the magnitude of the historical throughput.

It should be noted that the first model needs to be trained in advance. It is assumed that the first model is trained within a fourth time period before the current moment. The longer the duration of the fourth time period, the more training samples the first model can obtain, and the more accurate the model is. The shorter the duration of the fourth time period, the more short-term movement rules of the first communication device the first model can learn, thereby reducing or even avoiding the impact of frequent changes in the movement trajectory of the first communication device on the performance of the first model.

Exemplarily, the duration of the fourth time period may be configured by the first communication device. For example, the duration of the fourth time period may be one month.

In some embodiments, there may be multiple time windows within the fourth time period, and the first communication device may train the first model based on its trajectory information within these multiple time windows.

Exemplarily, there may be two time windows within the fourth time period, referred to as a first time window and a second time window, respectively. A start moment of the first time window is earlier than a start moment of the second time window. The first communication device may train the first model based on its actual trajectory information within the first time window, predicted trajectory information within the second time window, and actual trajectory information within the second time window.

Furthermore, the duration of the first time window and the duration of the second time window may be configured by the first communication device. For example, the duration of the first time window and/or the duration of the second time window may be in seconds.

At S403, the first communication device performs obfuscation processing on the third information, to determine first information.

The first information is obtained by performing obfuscation processing on the third information.

In some embodiments, the obfuscation processing may be performed based on a first rule, and the first rule includes at least one of: a modulo processing rule, a floor rounding rule, or a reference point-based processing rule.

The first rule may be a mathematical approximation rule.

The obfuscation processing can apply a specific mathematical approximation rule to the trajectory information of the first communication device to obtain obfuscated trajectory information.

It should be understood that the operation that the first communication device processes the third information based on the first rule to determine the first information may be understood as the operation that the first communication device performs the obfuscation processing on its third trajectory information within the first time period based on the mathematical approximation rule, to obtain its obfuscated third trajectory information (i.e., the first information) within the first time period.

The following provides exemplary description of the three mathematical approximation rules, i.e., the modulo processing rule, the floor rounding rule, and the reference point-based processing rule.
(1) The modulo processing rule: for example, the location information (the third information) of the first communication device is represented in two dimensions as (23.65, 45.91), applying modulo 3 processing yields processed location information as (23.65mod 3*3, 45.91mod 3*3), i.e., (21, 45). Therefore, the first information may be determined as (21, 45).
(2) The floor rounding rule (or, a ceiling rounding rule or a rounding rule may be used): for example, the location information (the third information) of the first communication device is represented in two dimensions as (23.65, 45.91), applying the floor rounding yields processed location information as (23, 45). Therefore, the first information may be determined as (23, 45).
(3) The reference point-based processing rule: for example, the location information (the third information) of the first communication device is represented in two dimensions as (23.65, 45.91), and trajectory reference points (which may be configured by the second communication device) near the first communication device are (21, 45) and (28, 50). Euclidean distances between (23.65, 45.91) and both (21, 45) and (28, 50) are calculated, respectively. It may be determined that (21, 45) is closer to the location of the first communication device, and therefore the first information may be determined as (21, 45).

Exemplarily, the mathematical approximation rule may further be other scrambling schemes, such as Gaussian white noise scrambling.

It should be noted that the mathematical approximation rule is only known to the first communication device, and the second communication device is not aware of the mathematical approximation rule. Therefore, the second communication device cannot derive the third information based on the first information reported by the first communication device in a reversed manner, thereby better protecting user privacy.

In some other embodiments, the first rule is configured to perform association processing on the third information.

It should be understood that the operation that the first communication device performs the association processing on the third information to determine the first information may be understood as: establishing an association between the third information and other information, ensuring a one-to-one mapping relationship between the third information and the other information. Therefore, the first communication device may transmit the other information as the first information to the second communication device.

It should be noted that the association between the third information and the other information may be agreed upon in advance by the first communication device and the second communication device, and not be known to any other communication devices than the first communication device and the second communication device.

Exemplarily, the location information (the third information) of the first communication device is represented in two dimensions as (23.65, 45.91), and a mapping relationship is established between (23.65, 45.91) and (45, 45). Therefore, the first information may be determined as (45, 45).

At S404, the first communication device transmits the first information to the second communication device.

Correspondingly, the second communication device may receive the first information from the first communication device.

It should be noted that the transmission of the first information over the air interface complies with the User Consent requirements defined by 3GPP. Since the granularity of the predicted trajectory information is relatively coarse, the first information obtained by processing the third information based on the first rule does not affect the accuracy of subsequent configurations of the at least one cell by the second communication device based on the first information.

It should be further noted that if the first information is obtained by the first communication device processing the third information based on the mathematical approximation rule, the second communication device cannot obtain the third information through the first information, thereby better protecting user privacy. If the first information is obtained by the first communication device processing the third information based on the association, the second communication device may obtain the third information through the first information, but other communication devices than the first communication device and the second communication device cannot obtain the third information through the first information, thereby protecting user privacy to a certain extent.

It should be further noted that the first communication device may transmit the information obtained by processing the third information based on the first rule to the second communication device, avoiding directly transmitting precise location information of the first communication device to the second communication device. Moreover, the second communication device may determine the first trajectory information of the first communication device within the first time period based on the information obtained by processing the third information based on the first rule. That is to say, the information obtained by the first communication device processing the third information based on the first rule may implicitly indicate the first trajectory information of the first communication device within the first time period to a certain extent.

At S405, the second communication device determines at least one cell associated with the first communication device within a first time period based on the first information.

It should be understood that the at least one cell associated with the first communication device within the first time period may be understood as at least one cell that the first communication device passes through within the first time period.

Through the scheme # A, the first communication device may process the third information based on the first rule to determine the first information, and transmit the first information to the second communication device. After receiving the first information, the second communication device may determine the at least one cell associated with the first communication device within the first time period based on the first information. In this way, the first communication device ensures user privacy and security by informing the second communication device of the obfuscated third information (the first information). After receiving the first information, the second communication device can perform precise configuration of the target candidate cell(s) based on the first information.

For the scheme # B, FIG. 5 illustrates another detailed schematic flowchart of a communication method according to an embodiment of the disclosure. As shown in FIG. 5, the detailed process of the communication method may include the following operations S501 to S505.

At S501, a first communication device obtains second information.

The second information indicates second trajectory information of the first communication device within a second time period.

Furthermore, a start moment of a first time period is not earlier than the current moment, and an end moment of the second time period is not later than the current moment.

For example, the start moment of the first time period is the current moment, and the end moment of the second time period is the current moment. At S502, the first communication device performs obfuscation processing on the second information to determine first information.

The first information is obtained by performing the obfuscation processing on the second information.

Furthermore, the obfuscation processing is performed based on a first rule, and the first rule includes at least one of: a modulo processing rule, a floor rounding rule, or a reference point-based processing rule.

The manner in which the first communication device processes the second information based on the first rule is similar to that described in S403, and is not repeated herein.

At S503, the first communication device transmits the first information to a second communication device.

Correspondingly, the second communication device may receive the first information from the first communication device.

It may be understood that in S503, the first information may be obfuscated trajectory information within a past period of time, which may, to a certain extent, indicate trajectory information within a future period of time.

At S504, the second communication device processes the first information, to determine fourth information.

The fourth information indicates first trajectory information of the first communication device within the first time period.

It should be noted that the first communication device may transmit the information obtained by processing the second information based on the first rule to the second communication device, avoiding directly transmitting precise location information of the first communication device to the second communication device. Moreover, the second communication device may determine the first trajectory information of the first communication device within the first time period based on the information obtained by processing the second information based on the first rule. That is to say, the information obtained by the first communication device processing the second information based on the first rule may implicitly indicate the first trajectory information of the first communication device within the first time period to a certain extent.

In some embodiments, the second communication device may process the first information based on a second model, to determine the fourth information.

Furthermore, the second model may be pre-trained.

It should be noted that the pre-trained second model and the pre-trained first model may be the same model or different models, which is not limited in the embodiments of the disclosure.

It should be further noted that when the pre-trained second model is different from the pre-trained first model, the difference between the pre-trained second model and the pre-trained first model may be the difference of obtained training samples.

The manner in which the second communication device processes the first information based on the pre-trained second model is similar to that described in S402, which is not repeated herein.

At S505, the second communication device determines at least one cell associated with the first communication device within a first time period based on the fourth information.

Through the scheme # B, the first communication device may process the second information based on the first rule to determine the first information, and transmit the first information to the second communication device. After receiving the first information, the second communication device may process the first information based on the pre-trained second model, determine the fourth information, and determine the at least one cell associated with the first communication device within the first time period based on the fourth information. In this way, the first communication device ensures user privacy and security by informing the second communication device of the obfuscated second information (the first information). After receiving the first information, the second communication device can perform precise configuration of the target candidate cell(s) based on the first information.

For the scheme # C, due to limitations in the computational capabilities of the first communication device, the first communication device may not be able to determine its third trajectory information within the first time period. Although the second communication device may obtain the first trajectory information of the first communication device within the first time period, the positioning accuracy of the first trajectory information has a relatively large error. Moreover, directly obtaining the first trajectory information of the first communication device within the first time period by the second communication device cannot ensure user privacy and security. Based on this, the first communication device side may preprocess its second trajectory information within the second time period, and the more complex subsequent calculations are completed by the second communication device side, enabling the second communication device and the first communication device to process cooperatively, thereby effectively addressing the above problems.

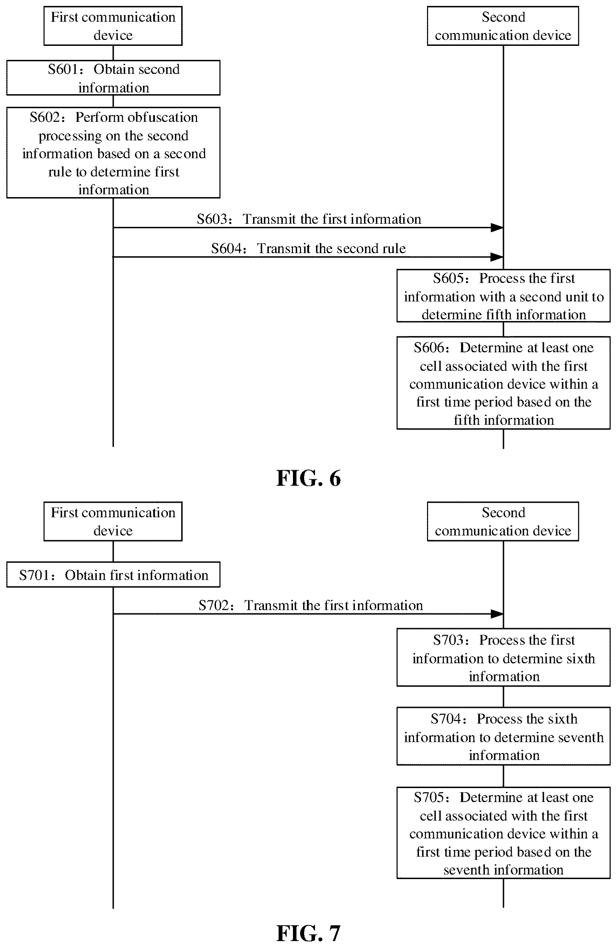

FIG. 6 illustrates yet another detailed schematic flowchart of a communication method according to an embodiment of the disclosure. As shown in FIG. 6, the detailed process of the communication method may include the following operations S601 to S606.

At S601, a first communication device obtains second information.

The second information indicates second trajectory information of the first communication device within a second time period.

A start moment of a first time period is not earlier than the current moment, and an end moment of the second time period is not later than the current moment.

For example, the start moment of the first time period is the current moment, and the end moment of the second time period is the current moment.

At S602, the first communication device performs obfuscation processing on the second information based on a second rule to determine first information.

The second rule is dynamically determined by the first communication device.

The first information is obtained by performing the obfuscation processing on the second information based on the second rule.

In some embodiments, the operation of performing the obfuscation processing on the second information based on the second rule to determine the first information may include: performing the obfuscation processing on the second information with a first unit of a first model, to determine the first information. That is to say, the first information is obtained by performing the obfuscation processing on the second information with the first unit of the first model.

The first unit is obtained by the first communication device partitioning the first model with the second rule, and the second rule is configured to partition the first model to obtain the first unit and a second unit of the first model.

Furthermore, the first model may be pre-trained.

The training manner of the first model is similar to that described in S402, which is not repeated herein.

In some embodiments, the second rule may be determined based on at least one of:

Remaining available computing power of the first communication device;
available uplink transmission resources over an air interface of the first communication device;
uplink channel quality of the first communication device;
data volume of the first information; or
remaining available energy of the first communication device.

It should be understood that the operation that the first communication device processes the second information with the first unit of the pre-trained first model may be understood as that the first communication device encrypts the second information with the first unit of the pre-trained first model to obtain the encrypted second information (i.e., the first information).

It should be further understood that at the second communication device side, when processing the first information, the second communication device needs to process the first information with a second unit corresponding to the first unit in order to obtain the first trajectory information of the first communication device within the first time period. If merely obtaining the first information, the second communication device cannot directly obtain the first trajectory information of the first communication device within the first time period based on the first information. Moreover, even if the second communication device has the second unit corresponding to the first unit, since the second communication device cannot be aware of the encryption process of the first unit, the second communication device cannot reverse-engineer the second information based on the fifth information, thereby better protecting user privacy and data security.

It should be noted that due to the differences in the partition manners of the first model, even if the first communication device inputs the same second information into the pre-trained first model, the first information obtained by the first communication device processing the second information with the first unit will be different. However, the different first information still corresponds to the same second information.

It should be further noted that through dynamic controlling of the partition of the first model by the first communication device, a certain degree of security may be achieved. The dynamically changed content of the first information also increases the difficulty for third-party listeners to crack.

Exemplarily, the first model may be a multilayer neural network, the first unit may be an input layer of the multilayer neural network, and the second unit may be hidden layer(s) and an output layer of the multilayer neural network. For example, it is assumed that the first model is an Encoder-Decoder LSTM network (a three-layer neural network), the first unit may be an Encoder LSTM layer (a first layer), the second unit may be a Decoder LSTM layer (a second layer) and a fully connected layer (a third layer). For another example, it is assumed that the first model is an Encoder-Decoder LSTM network, the first unit may be an Encoder LSTM layer and a Decoder LSTM layer, and accordingly, the second unit may be a fully connected layer.

At S603, the first communication device transmits the first information to a second communication device.

Correspondingly, the second communication device may receive the first information from the first communication device.

At S604, the first communication device transmits the second rule to the second communication device.

Correspondingly, the second communication device may receive the second rule from the first communication device.

It should be noted that the first information and the second rule may both be included in the same information, and the first communication device needs to transmit the first information and the second rule to the second communication device through the same signaling. The first information and the second rule may also be included in different information, in which case the first communication device needs to transmit the first information and the second rule respectively to the second communication device through different signaling.

Exemplarily, it is assumed that the first model is an Encoder-Decoder LSTM network, the second rule may be configured to indicate that the first unit is an Encoder LSTM layer and the second unit is a Decoder LSTM layer and a fully connected layer, and the first information may be output information of the Encoder LSTM layer.

At S605, the second communication device processes the first information with a second unit to determine fifth information.

The fifth information indicates the first trajectory information of the first communication device within the first time period.

The second unit is obtained by the second communication device partitioning the first model with the second rule.

It should be noted that the first communication device may transmit the information obtained by processing the second information with the first unit to the second communication device, avoiding directly transmitting precise location information of the first communication device to the second communication device. Moreover, the second communication device may determine the first trajectory information of the first communication device within the first time period based on the information obtained by processing the second information with the first unit. That is to say, the first communication device may implicitly indicate the first trajectory information of the first communication device within the first time period to a certain extent based on the information obtained by processing the second information with the first unit.

At S606, the second communication device determines at least one cell associated with the first communication device within a first time period based on the fifth information.

Through the scheme # C, the first communication device may determine the first information by processing the second information with the first unit, and transmit the first information to the second communication device. After receiving the first information, the second communication device may process the first information with the second unit, determine the fifth information, and determine the at least one cell associated with the first communication device within the first time period based on the fifth information. In this way, the first communication device informs the second communication device of the first information obtained by performing the obfuscation processing on the second information with the second rule, ensuring user privacy and security. After receiving the first information, the second communication device can perform precise configuration of the target candidate cell(s) based on the first information.

For another possible implementation, a first communication device may obtain first information, and a second communication device may determine at least one cell associated with the first communication device within a first time period based on the first information.

The first information includes at least one of the following from signals transmitted between the first communication device and the second communication device within a third time period: a reference signal receiving power (RSRP), a signal arrival time difference, or a signal arrival angle.

It should be noted that the RSRP and/or the signal arrival angle may be determined by the first communication device based on the signals transmitted by the second communication device. The signal arrival time difference may be determined by the signal interaction between the first communication device and the second communication device.

It should be further noted that the first communication device may include a storage unit that may be configured to store the first information and is capable of continuously updating the first information.

With reference to FIG. 7, the following describes a detailed process of the interaction between the first communication device and the second communication device in this implementation.

FIG. 7 illustrates still yet another detailed schematic flowchart of a communication method according to an embodiment of the disclosure. As shown in FIG. 7, the detailed process of the communication method may include the following operations S701 to S705.

At S701, a first communication device obtains first information.

The first information includes at least one of the following from signals transmitted between the first communication device and the second communication device within a third time period: RSRP, signal arrival time difference, or signal arrival angle.

It should be noted that the third time period may be a period of time before the current moment, that is to say, an end moment of the third time period is the current time. The third time period may also be a period of time before a previous moment, that is to say, the end moment of the third time period is the previous moment of the current moment. A start moment and the end moment of the third time period are not limited in the embodiments of the disclosure.

Furthermore, in some embodiments, the end moment of the third time period is not later than the current moment.

In some embodiments, the third time period may be determined by the first communication device. Exemplarily, a duration of the third time period may be determined based on at least one of:
a movement speed of the first communication device; or
a number of location sampling points of the first communication device.

An exemplary explanation for determining the duration of the third time period may refer to the description of the first time period, and is not repeated herein.

At S702, the first communication device transmits the first information to a second communication device.

Correspondingly, the second communication device receives the first information from the first communication device.

At S703, the second communication device processes the first information to determine sixth information.

The sixth information indicates second trajectory information of the first communication device within the third time period.

Exemplarily, the second communication device may process the first information based on a positioning technology (e.g., a RSRP fingerprint technology), thereby determining the sixth information.

At S704, the second communication device processes the sixth information to determine seventh information.

The seventh information indicates the first trajectory information of the first communication device within the first time period.

It should be noted that the first communication device may transmit the RSRP, the signal arrival time difference, and the signal arrival angle of signals transmitted between the first communication device and the second communication device within the third time period to the second communication device, avoiding directly transmitting precise location information of the first communication device to the second communication device. Moreover, the second communication device may determine the first trajectory information of the first communication device within the first time period based on at least one of the RSRP, the signal arrival time difference, or the signal arrival angle. That is to say, the RSRP, the signal arrival time difference, and the signal arrival angle of the signals transmitted between the first communication device and the second communication device within the third time period may implicitly indicate the first trajectory information of the first communication device within the first time period to a certain extent.

In some embodiments, the second communication device may process the sixth information based on a third model, to determine the seventh information.

Furthermore, the third model may be pre-trained.

It should be noted that the pre-trained third model may be the same as the pre-trained first model and/or the pre-trained second model, and the pre-trained third model may also be different from the pre-trained first model and the pre-trained second model, which is not limited in the embodiments of the disclosure.

It should be further noted that when the pre-trained second model is different from other pre-trained models (e.g., the first model or the second model), the difference between the pre-trained second model and the other pre-trained models may be the difference of obtained training samples.

The manner in which the second communication device processes the sixth information based on the pre-trained third model is similar to that described in S402, which is not repeated herein.

At S705, the second communication device determines at least one cell associated with the first communication device within a first time period based on the seventh information.

Through the above implementation, the first communication device may transmit the obtained first information to the second communication device; the second communication device may process the first information to determine the sixth information, and determine at least one cell associated with the first communication device within the first time period based on the seventh information obtained by processing the sixth information with the pre-trained third model. In this way, the first communication device may transmit the RSRP, the signal arrival time difference, and the signal arrival angle (the first information) of the signals transmitted between the first communication device and the second communication device within the third time period to the second communication device, avoiding directly transmitting precise location information of the first communication device to the second communication device and ensuring user privacy and security. After receiving the first information, the second communication device can perform precise configuration of the target candidate cell(s) based on the first information.

Based on the above two possible implementations, the second communication device may transmit configuration information to the first communication device after determining the at least one cell associated with the first communication device within the first time period. The configuration information is configured to indicate at least one target candidate cell, and the at least one target candidate cell is one of the at least one cell.

Correspondingly, the first communication device may receive the configuration information from the second communication device.

In some embodiments, before the second communication device transmits the configuration information to the first communication device, the method further includes that: dwell time of the first communication device in each of the at least one cell is determined; and in a case where the dwell time of the first communication device in a first cell is greater than or equal to a first threshold, the first cell is configured as the at least one target candidate cell, the first cell is one of the at least one cell.

It should be noted that the first threshold may be configured by the second communication device. For example, the second communication device may set the first threshold to 1 second.

Based on the method, by configuring the cell(s) in which the dwell time of the first communication device is greater than or equal to the first threshold as the at least one target candidate cell, frequent handovers of the first communication device may be avoided.

The following provides a detailed explanation of the communication methods provided in the above embodiments in combination with specific application scenarios.

An embodiment of the disclosure provides a conditional handover method based on privacy-protected trajectory prediction. The method may be configured to optimize the decision of the gNB when configuring at least one target candidate cell, reduce connection interruptions caused by handovers, and improve the overall network throughput performance while protecting the privacy of the UE. The method may include the following three parts:
(1) The signaling content and interaction process in the configuration process of at least one target candidate cell during conditional handover when trajectory prediction occurs at different locations in the network.
(2) The execution process of the UE and the gNB and the executing entities in the preparation phase for conditional handover when the AI model is deployed at different locations are clarified. This is an area that 3GPP is currently discussing for standardization but is still a blank.
(3) While utilizing sensitive information such as UE movement trajectory, the privacy information is effectively protected and the requirement of user consent is followed by means of the UE or the gNB obfuscating the trajectory information, the UE or the gNB estimating the trajectory information, and the UE reporting preprocessed information.

In the embodiments of the disclosure, trajectory prediction may occur at the UE side or at the gNB side, or the trajectory prediction may be completed by the UE and the gNB collaboratively. The following embodiments further introduce the technical solution in the embodiments of the disclosure in combination with three scenarios of trajectory prediction.

In a first scenario, the trajectory prediction occurs at the UE side (referring to FIG. 4).

There are provided for this scenario a method for trajectory prediction at the UE side and a scheme to obfuscate the trajectory location, which can perform precise configuration of at least one target candidate cell while hiding precise location information of the UE.

The UE may obtain second information, input the second information into a pre-trained first model to determine third information, process the third information based on a first rule to determine first information. The UE transmits the first information to the gNB, and the gNB determines at least one cell associated with the UE within a first time period based on the first information.

Below are explanations of the information, the model, and the rule involved in the above process.

### (1) Second Information

The content of the second information includes, but is not limited to, location information, movement speed information, and movement direction information (azimuth) of the UE within a second time period.

The second information is the information that the UE may directly collect through its own GPS or other sensor devices, without the need for the gNB side to configure corresponding reference signals. The UE side should be equipped with a storage unit configured to store the second information.

The second time period is determined by the UE itself, and a duration of the second time period may be determined based on a scalar speed of the UE. For example, when the UE moves at a speed of 15 km/h, the duration of the second time period may be set to 1 minute. When the UE moves at a speed of 30 km/h, the duration of the second time period may be set to 30s. The duration of the second time period may also be determined by the number of UE location sampling points, for example, at least 10 UE location sampling points need to be included within the duration of the second time period.

The storage unit continuously stores the second information of the UE within the second time period and continuously update the second information.

### (2) First Model and Third Information

The first model utilizes the Artificial Intelligence (AI) technology. The input of the first model is the second information, and the output is the third information.

The first model may be a supervised learning model or a reinforcement learning model, e.g., an Encoder-Decoder LSTM model, or a deep neural network model.

The third information is predicted third trajectory information of the UE within a first time period in the future, and a duration of the first time period may be determined based on a scalar speed of the UE. For example, when the UE moves at a speed of 15 km/h, the duration of the first time period may be set to 1 minute. When the UE moves at a speed of 30 km/h, the duration of the first time period may be set to 30s. The duration of the first time period may also be determined by the number of UE location sampling points, for example, at least 10 UE location sampling points need to be included within the duration of the first time period. There is no mandatory relationship between the first time period and the second time period. The duration of the first time period may be equal to or not equal to the duration of the second time period.

Specifically, the first model needs to be trained in advance. The training manner of the first model may refer to the description in the aforementioned embodiments, which is not repeated herein.

### (3) First Rule and First Information

The first rule may be configured to obfuscate the third information. For privacy protection or security reasons, the UE may not directly provide precise location information of the UE to the gNB, and the location information of the UE may be obfuscated according to the first rule.

The first rule may also function as a model that may be configured to obfuscate the input information.

With the obfuscation function, location coordinates of the UE is processed through a specific mathematical approximation rule, to obtain coordinate information with actual location being hidden.

Specifically, the mathematical approximation rule may be a modulo processing. For example, the location information is represented in two dimensions as (23.65, 45.91), applying modulo 3 processing yields processed location information as (23.65mod 3*3, 45.91mod 3*3), i.e., (21, 45). The mathematical approximation rule may also be floor rounding (ceiling rounding, rounding). For example, the location information is represented in two dimensions as (23.65, 45.91), applying the floor rounding yields processed location information as (23, 45). The mathematical approximation rule may also be based on reference points. For example, the location information is represented in two dimensions as (23.65, 45.91), and trajectory reference points near the UE are (21, 45) and (28, 50), Euclidean distances between (23.65, 45.91) and (21, 45) and between (23.65, 45.91) and (28, 50) are calculated, respectively, it may be determined that (21, 45) is closer to the location of the UE, and therefore the first information is determined as (21, 45). The mathematical approximation rule may also be other scrambling schemes, such as Gaussian white noise scrambling.

The mathematical approximation rule is only known to the UE, and the gNB side does not know the corresponding rule and cannot derive the actual location information of the UE from the first information reported by the UE in a reversed manner.

The first information is the obfuscated third information, which may better protect user privacy. The transmission of the first information over the air interface meets the requirement of user consent defined by 3GPP. Since the granularity of trajectory prediction for conditional handover is coarse, the obfuscated first information does not affect the subsequent decision of the gNB when configuring at least one target candidate cell. The transmission of the first information may be carried out through RRC signaling or MAC CE.

### (4) At Least One Cell

The at least one cell may be determined by a model. The input of the model is the first information, and the output is at least one cell associated with the UE within the first time period.

The gNB may determine at least one cell that the UE will pass through within the first time period in the future based on information of nearby covered cells, and add the at least one cell to at least one target candidate cell for conditional handover. The at least one target candidate cell may form a target candidate cell list.

Furthermore, if the gNB determines that the dwell time (a time difference from the UE entering the coverage of the cell to leaving the coverage of the cell) of the UE in a certain cell is less than the first threshold, the cell will not be added to the at least one target candidate cell for conditional handover, thereby avoiding frequent handovers of the UE. The first threshold may be configured by the gNB side, for example, the gNB may configure the first threshold to be 1 second.

Compared to the traditional decision-making mechanism for determining at least one target candidate cell based on RSRP measurement reporting, in the conditional handover method based on trajectory prediction, the NES cell to be activated soon may be configured as the target candidate cell, or notify the NES cell may be notified to turn activated, so as for the UE to access, thereby avoiding the UE from missing the opportunity of accessing the NES cell with a better channel.

In a second scenario, the trajectory prediction occurs at the gNB side (referring to FIG. 5 and FIG. 7).

Scheme One (referring to FIG. 5): the UE may utilize the first rule to perform obfuscation processing on the second information, determine the first information, and report the first information. The gNB may input the first information into the pre-trained second model to determine the fourth information, and determine at least one cell associated with the UE within the first time period based on the fourth information.

Scheme Two (referring to FIG. 7): the UE may report the first information. The gNB determines the sixth information based on the positioning technology and the first information, inputs the sixth information into the pre-trained third model to determine the seventh information, and determines at least one cell associated with the UE within the first time period based on the seventh information.

Below are explanations of the first information and the sixth information involved in the above process.

### (1) First Information

The first information may be the information obtained by processing the second information with the first rule (the scheme one). The first information may also be one or more of the RSRP, the signal arrival time difference, or the signal arrival angle information obtained by the UE within the third time period (the scheme two). The UE side should be equipped with a storage unit to store the first information. The first information may be reported through MeasConfig of RRCReconfiguration-IEs or transmitted through MAC CE.

The obfuscated second information (i.e., the first information) in the scheme one may be a result obtained by processing the second information with the first rule.

For the scheme one (referring to FIG. 5), if the first information is the obfuscated second information, compared to the existing technology in which the UE directly reports its location information at the current moment, in this scheme, the UE reports the obfuscated second information (i.e., the first information), and the obfuscation processing operation may protect user privacy.

For the scheme two (referring to FIG. 7), if the first information is one or more of the RSRP, the signal arrival time difference, or the signal arrival angle information obtained by the UE within the third time period, the gNB may estimate the location of the UE based on the reported first information, without the need for the UE to directly report location information, which may effectively protect the actual location information of the UE.

### (2) Sixth Information

In the scheme two (referring to FIG. 7), the sixth information may be obtained by processing the first information based on positioning technology (such as RSRP fingerprint technology), and the sixth information is the estimated second trajectory information of the UE within the third time period. By the gNB estimating the second trajectory information of the UE within the third time period, mandatory reporting of sensitive second trajectory information of the UE within the third time period may be avoided.

In a third scenario, the trajectory prediction may be completed by the UE and the gNB collaboratively (referring to FIG. 6).

Due to limitations in the computational capabilities of the UE, the UE may not be able to perform the complete trajectory prediction functions. The positioning accuracy at the gNB side has an greater error than that resulted by the UE directly processing local location information. Moreover, if the gNB side directly obtains the location information of the UE for analysis, privacy problems may occur. If the UE preprocess the trajectory information and the gNB side completes the more complex subsequent calculations, the above two problems may be effectively addressed. Therefore, collaboration between the UE and the network side is required.

There is provided for this scenario a method for obtaining first information, and the first information implicitly includes the second trajectory information of the UE within the second time period and may be configured to predict the future trajectory of the UE. The first information is the output information of the first unit in the first model and must be input into the second unit in the first model corresponding to the first unit to obtain the first trajectory information (the fifth information) of the UE within the first time period. If the gNB merely obtains the first information, the gNB cannot directly obtain the first trajectory information of the UE within the first time period based on the first information. Even if the gNB has the second unit corresponding to the first unit, the gNB or other listeners cannot reverse-engineer the second information based on the fifth information. The first information uploaded by the UE is equivalent to the encrypted second information, which can effectively protect the location privacy of the UE and ensure data security. For the same second information input, the first information output by the first units generated by different partition strategies will not be exactly the same, but all contain the same second information.

In this scenario, the UE may determine the second rule based on at least one of:
remaining available computing power of the UE;
available uplink transmission resources over an air interface of the UE;
uplink channel quality of the UE;
data volume of the first information; or
remaining available energy of the UE.

The UE may partition the first model with the second rule to get the first unit, and obtain the second information, input the second information into the first unit to determine the first information, and transmit the first information and the second rule to the gNB. The gNB partition the first model based on the first information and the second rule to get the second unit and determines the fifth information, and determines at least one cell associated with the UE within the first time period based on the fifth information.

Below are explanations of the partition of the first model, the first information and the second rule involved in the above process.

### (1) Partition of the first model

The first model may be partitioned into the first unit and the second unit. Specifically, the first model may be a multilayer neural network, the first unit may be the input layer of the multilayer neural network, and the second unit may be the hidden layer(s) and output layer of the multilayer neural network. For example, the first model may be an Encoder-Decoder LSTM network (a three-layer neural network), the first unit is an Encoder LSTM layer (a first layer), the second unit is a Decoder LSTM layer (a second layer) and a fully connected layer (a third layer). For another example, the first model may be an Encoder-Decoder LSTM network, the first unit may be an Encoder LSTM layer and a Decoder LSTM layer, and accordingly, the second unit may be a fully connected layer.

Both the UE side and the network side are configured with a complete first model.

The partition of the first model is dynamically controlled by the UE, which may bring a certain degree of security assurance. The dynamically changed first information will increase the difficulty for third-party listeners to crack. Moreover, the obfuscated location information implicitly included in the first information may better protect user privacy and enable the gNB to accurately obtain the required fifth information.

### (2) First Information and Second Rule

It should be noted that the first information and the second rule may both be included in the same information, and the UE needs to transmit the first information and the second rule to the gNB through the same signaling. The first information and the second rule may also be included in different information, in which case the UE needs to transmit the first information and the second rule respectively to the gNB through different signaling.

Exemplarily, it is assumed that the first model is an Encoder-Decoder LSTM network, the second rule may be configured to indicate that the first unit is the Encoder LSTM layer and the second unit is the Decoder LSTM layer and the fully connected layer, and the first information may be the output information of the Encoder LSTM layer.

The transmission of the first information may be carried out through RRC signaling or MAC CE.

After receiving the second rule and the first information, the gNB may partition the first model at the gNB side into the same first unit and second unit as at the UE side with the second rule, and input the first information into the partitioned second unit.

The embodiment of the disclosure provides a conditional handover method based on trajectory prediction, which may be divided into three scenarios according to the different devices performing the trajectory prediction: the trajectory prediction occurs at the UE side, the trajectory prediction occurs at the gNB side, and the trajectory prediction is completed by the gNB and the UE cooperatively. By introducing UE location-related information in the preparation process of conditional handover, and combining historical mobility experience (e.g., inputting historical trajectory information into the first model to obtain future predicted trajectory information), such as location results, speed information, reference signal information, etc., a decision on the target candidate cell list suitable for the UE may be generated. During the process of trajectory prediction, the actual trajectory information of the UE may be effectively hidden from the gNB.

The preferred implementations of the disclosure have been described in detail above in combination with the drawings. However, the disclosure is not limited to the specific details in the implementations described above. Within the scope of the technical concept of the disclosure, various simple modifications may be made to the technical solutions in the disclosure, all of which are within the scope of protection of the disclosure. For example, the specific technical features described in the above specific implementations may be combined in any suitable way without contradiction. In order to avoid unnecessary repetition, the disclosure will not further elaborate on various possible combinations. For another example, various different implementations in the disclosure may also be combined arbitrarily, as long as they do not violate the idea of the disclosure, they should also be regarded as the content disclosed by the disclosure. For yet another example, provided there is no conflict, the various embodiments described in the disclosure and/or the technical features in the various embodiments may be combined with any existing technologies, and the technical solutions obtained after combination should also fall within the scope of protection of the disclosure.

It should be further understood that in the various method embodiments in the disclosure, the size of the sequence numbers in the above processes does not imply the order of execution. The order of execution in the processes should be determined by their functions and inherent logic, and should not constitute any limitation on the implementation process in the embodiments of the disclosure.

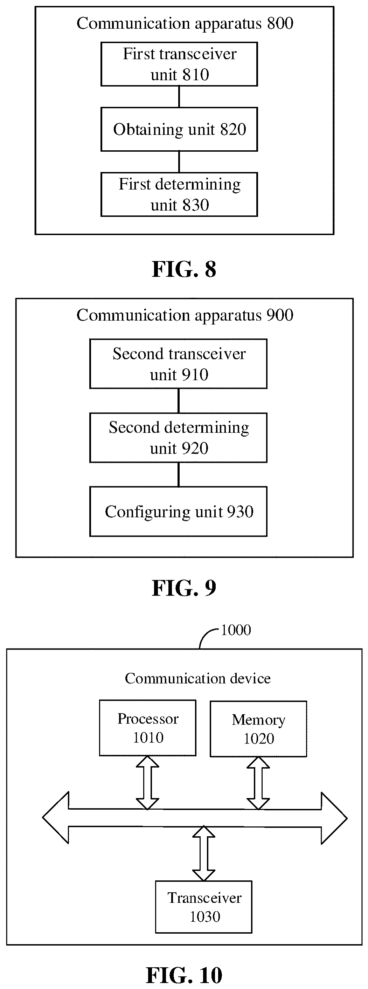

Based on the same inventive concept as the aforementioned embodiments, FIG. 8 illustrates a schematic diagram of a composition structure of a communication apparatus according to an embodiment of the disclosure, applied to a first communication device. As shown in FIG. 8, a communication apparatus 800 may include a first transceiver unit 810.

The first transceiver unit 810 is configured to transmit first information to a second communication device. The first information implicitly indicates first trajectory information of the first communication device within a first time period, and the first trajectory information is configured to determine at least one target candidate cell.

In some embodiments, as shown in FIG. 8, the communication apparatus 800 may further include an obtaining unit 820 and a first determining unit 830.

The obtaining unit 820 is configured to obtain second information, the second information indicates second trajectory information of the first communication device within a second time period.

The first determining unit 830 is configured to determine the first information based on the second information. A start moment of the first time period is not earlier than a current moment, and an end moment of the second time period is not later than the current moment.

In some embodiments, the second trajectory information includes at least one of: location information, movement speed information, or movement direction information.

In some embodiments, the second trajectory information further includes movement speed information and/or movement direction information.

In some embodiments, the first determining unit 830 is further configured to process the second information to determine third information, the third information indicates third trajectory information of the first communication device within the first time period; and perform obfuscation processing on the third information to determine the first information.

In some embodiments, the first information is obtained by performing obfuscation processing on the second information.

In some embodiments, the obfuscation processing is performed based on a first rule, and the first rule includes at least one of: a modulo processing rule, a floor rounding rule, or a reference point-based processing rule.

In some embodiments, the first determining unit 830 is further configured to perform obfuscation processing on the second information based on a second rule, to determine the first information. The second rule is dynamically determined by the first communication device.

In some embodiments, the first determining unit 830 is further configured to perform the obfuscation processing on the second information with a first unit of a first model. The first unit is obtained by the first communication device partitioning the first model with the second rule, and the second rule is configured to partition the first model to obtain the first unit and a second unit of the first model.

In some embodiments, the first transceiver unit 810 is further configured to transmit the second rule to the second communication device.

In some embodiments, the second rule is determined based on at least one of:
Remaining available computing power of the first communication device;
Available uplink transmission resources over an air interface of the first communication device;
Uplink channel quality of the first communication device;
Data volume of the first information; or
Remaining available energy of the first communication device.

In some embodiments, the obtaining unit 820 is further configured to obtain the first information. The first information includes at least one of the following from signals transmitted between the first communication device and the second communication device within a third time period: a reference signal receiving power (RSRP), a signal arrival time difference, or a signal arrival angle. A start moment of the first time period is not earlier than a current moment, and an end moment of the third time period is not later than the current moment.

In some embodiments, at least one of the first time period, the second time period, or the third time period is determined by the first communication device.

In some embodiments, at least one of a duration of the first time period, a duration of the second time period, or a duration of the third time period is determined based on a movement speed and/or a number of location sampling points of the first communication device.

In some embodiments, the first transceiver unit 810 is further configured to receive configuration information from the second communication device. The configuration information is configured to indicate the at least one target candidate cell.

The embodiments of the disclosure provide a communication apparatus, where the first communication device may transmit the first information to the second communication device, the first information implicitly indicates the first trajectory information of the first communication device within the first time period, and the first trajectory information is configured to determine the at least one target candidate cell. In this way, after receiving the first information, the second communication device may determine the at least one target candidate cell based on the first trajectory information implicitly indicated by the first information. Therefore, the first communication device implicitly informs the second communication device of the first trajectory information, ensuring user privacy and security. After receiving the first information, the second communication device can achieve precise configuration of the target candidate cell(s) based on the first trajectory information of the first communication device.

It should be understood by those skilled in the art that the related description of the aforementioned communication apparatus in the embodiments of the disclosure may be understood by referring to the related description of the communication method in the embodiments of the disclosure.

Based on the same inventive concept as the aforementioned embodiments, FIG. 9 illustrates another schematic diagram of a composition structure of a communication apparatus according to an embodiment of the disclosure, applied to a second communication device. As shown in FIG. 9, a communication apparatus 900 may include a second transceiver unit 910.

The second transceiver unit 910 is configured to receive first information from a first communication device. The first information implicitly indicates first trajectory information of the first communication device within a first time period, and the first trajectory information is configured to determine at least one target candidate cell.

In some embodiments, as shown in FIG. 9, the communication apparatus 900 may further include a second determining unit 920.

The second determining unit 920 is configured to determine at least one cell associated with the first communication device within the first time period based on the first information.

The second transceiver unit 910 is further configured to transmit configuration information to the first communication device. The configuration information is configured to indicate the at least one target candidate cell, and the at least one target candidate cell is one of the at least one cell.

In some embodiments, the first information is obtained by performing obfuscation processing on third information, and the third information indicates third trajectory information of the first communication device within the first time period.

In some embodiments, the first information is obtained by performing obfuscation processing on second information, the second information indicates second trajectory information of the first communication device within a second time period. A start moment of the first time period is not earlier than a current moment, and an end moment of the second time period is not later than the current moment.

In some embodiments, the second determining unit 920 is further configured to process the first information to determine fourth information, the fourth information indicates the first trajectory information of the first communication device within the first time period; and determine the at least one cell based on the fourth information.

In some embodiments, the second trajectory information includes location information.

In some embodiments, the second trajectory information further includes movement speed information and/or movement direction information.

In some embodiments, the obfuscation processing is performed based on a first rule, and the first rule includes at least one of: a modulo processing rule, a floor rounding rule, or a reference point-based processing rule.

In some embodiments, the first information is obtained by performing obfuscation processing on second information based on a second rule. The second rule is dynamically determined by the first communication device, and the second information indicates second trajectory information of the first communication device within a second time period. A start moment of the first time period is not earlier than a current moment, and an end moment of the second time period is not later than the current moment.

In some embodiments, the first information is obtained by performing the obfuscation processing on the second information with a first unit of a first model. The first unit is obtained by the first communication device partitioning the first model with the second rule, and the second rule is configured to partition the first model to obtain the first unit and a second unit of the first model.

In some embodiments, the second determining unit 920 is further configured to process the first information with the second unit to determine fifth information, the fifth information indicates the first trajectory information of the first communication device within the first time period, and the second unit is obtained by the second communication device partitioning the first model with the second rule; and determine the at least one cell based on the fifth information.

In some embodiments, the second transceiver unit 910 is further configured to receive the second rule from the first communication device.

In some embodiments, the second rule is determined based on at least one of:
Remaining available computing power of the first communication device;
Available uplink transmission resources over an air interface of the first communication device;
Uplink channel quality of the first communication device;
Data volume of the first information; or
Remaining available energy of the first communication device.

In some embodiments, the first information includes at least one of the following from signals transmitted between the first communication device and the second communication device within a third time period: a reference signal receiving power (RSRP), a signal arrival time difference, or a signal arrival angle. A start moment of the first time period is not earlier than a current moment, and an end moment of the third time period is not later than the current moment.

In some embodiments, the second determining unit 920 is further configured to process the first information to determine sixth information, the sixth information indicates second trajectory information of the first communication device within the third time period; process the sixth information to determine seventh information, the seventh information indicates the first trajectory information of the first communication device within the first time period; and determine the at least one cell based on the seventh information.

In some embodiments, as shown in FIG. 9, the communication apparatus 900 may further include a configuring unit 930.

The second determining unit 920 is further configured to determine dwell time of the first communication device in each of the at least one cell.

The configuring unit 930 is configured to configure, in a case where the dwell time of the first communication device in a first cell is greater than or equal to a first threshold, the first cell as the at least one target candidate cell. The first cell is one of the at least one cell.

In some embodiments, at least one of the first time period, the second time period, or the third time period is determined by the first communication device.

In some embodiments, at least one of a duration of the first time period, a duration of the second time period, or a duration of the third time period is determined based on a movement speed and/or a number of location sampling points of the first communication device.

The embodiments of the disclosure provide a communication apparatus, where the first communication device may transmit the first information to the second communication device, the first information implicitly indicates the first trajectory information of the first communication device within the first time period, and the first trajectory information is configured to determine the at least one target candidate cell. In this way, after receiving the first information, the second communication device may determine the at least one target candidate cell based on the first trajectory information implicitly indicated by the first information. Therefore, the first communication device implicitly informs the second communication device of the first trajectory information, ensuring user privacy and security. After receiving the first information, the second communication device can achieve precise configuration of the target candidate cell(s) based on the first trajectory information of the first communication device.

It should be understood by those skilled in the art that the related description of the aforementioned communication apparatus in the embodiments of the disclosure may be understood by referring to the related description of the communication method in the embodiments of the disclosure.

FIG. 10 is a schematic structural diagram of a communication device 1000 according to an embodiment of the disclosure. As shown in FIG. 10, the communication device 1000 includes a processor 1010 and a memory 1020. The memory 1020 may store a computer program, and the processor 1010 may call and run a computer program from the memory 1020 to implement the method in the embodiments of the disclosure.

The memory 1020 may be a separate device independent of the processor 1010, or may be integrated in the processor 1010.

In some embodiments, as shown in FIG. 10, the communication device 1000 may further include a transceiver 1030, and the processor 1010 may control the transceiver 1030 to communicate with other devices. Specifically, the transceiver 1030 may transmit information or data to other devices, or receive information or data transmitted by other devices.

The transceiver 1030 may include a transmitter and a receiver. The transceiver 1030 may further include one or more antennas.

In some embodiments, an embodiment of the disclosure further provides another composition of a communication device, and the communication device may include the communication apparatus 800 or the communication apparatus 900 described in any one of the aforementioned embodiments.

In some embodiments, the communication device may be the first communication device in the embodiments of the disclosure, and the processor 1010 may call and run the computer program from the memory 1020 to implement the method implemented by the first communication device in the embodiments of the disclosure, which is not repeated herein for the sake of brevity.

In some embodiments, the communication device may be the second communication device in the embodiments of the disclosure, and the processor 1010 may call and run the computer program from the memory 1020 to implement the method implemented by the second communication device in the embodiments of the disclosure, which is not repeated herein for the sake of brevity.

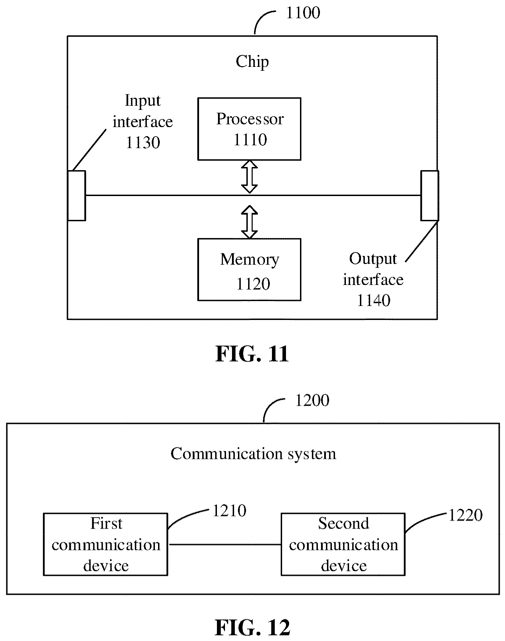

FIG. 11 is a schematic structural diagram of a chip according to an embodiment of the disclosure. As shown in FIG. 11, a chip 1100 includes a processor 1110. The processor 1110 may call and run a computer program from a memory, to implement the method in the embodiments of the disclosure.

In some embodiments, as shown in FIG. 11, the chip 1100 may further include a memory 1120. The processor 1110 may call and run a computer program from the memory 1120, to implement the method in the embodiments of the disclosure.

The memory 1120 may be a separate device independent of the processor 1110, or may be integrated in the processor 1110.

In some embodiments, the chip 1100 may further include an input interface 1130. The processor 1110 may control the input interface 1130 to communicate with other devices or chips. Specifically, the input interface 1130 may obtain information or data transmitted by other devices or chips.

In some embodiments, the chip 1100 may further include an output interface 1140. The processor 1110 may control the output interface 1140 to communicate with other devices or chips. Specifically, the output interface 1140 may output information or data to other devices or chips.

In some embodiments, the chip may be applied to the first communication device in the embodiments of the disclosure, which is not repeated herein for the sake of brevity.

In some embodiments, the chip may be applied to the second communication device in the embodiments of the disclosure, which is not repeated herein for the sake of brevity.

It should be understood that the chip mentioned in the embodiments of the disclosure may also be referred to as a system on chip, a system chip, a chip system, or an on-chip system, etc.

FIG. 12 is a schematic block diagram of a communication system 1200 according to an embodiment of the disclosure. As shown in FIG. 12, the communication system 1200 includes a first communication device 1210 and a second communication device 1220.

The first communication device 1210 may be configured to implement the corresponding functions implemented by the first communication device in the aforementioned method, and the second communication device 1220 may be configured to implement the corresponding functions implemented by the second communication device in the aforementioned method, which are not repeated herein for the sake of brevity.

It may be understood that the processor in the embodiments of the disclosure may be an integrated circuit chip having signal processing capability. In the implementation process, each operation of the above method embodiments may be accomplished by an integrated logic circuit of hardware or by an instruction in form of software in the processor. The above processor may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, operations, and logical block diagrams disclosed in the embodiments of the disclosure. The general purpose processor may be a microprocessor or any conventional processor or the like. The operations of the methods disclosed in the embodiments of the disclosure may be directly accomplished by the hardware decoding processor, or be accomplished by a combination of hardware and software modules in the decoding processor. The software modules may be located in a Random Access Memory (RAM), a flash memory, a Read-Only Memory (ROM), a Programmable ROM (PROM) or an electrically erasable programmable memory, a register and other storage medium mature in the art. The storage medium is located in the memory, and the processor reads information in the memory to implement the operations of the methods above in combination with the hardware.

It may be further understood that the memory in the embodiments of the disclosure may be a transitory memory or a non-transitory memory, or may include both the transitory memory and the non-transitory memory. The non-transitory memory may be a ROM, a PROM, an Erasable PROM (EPROM), an Electrically EPROM (EEPROM), or a flash memory. The transitory memory may be a RAM that is used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory described herein is intended to include, but is not limited to, these and any other suitable types of memories.

It may be further understood that the above memory is an example but not a limiting description. For example, the memory in the embodiments of the disclosure may also be a SRAM, a DRAM, a SDRAM, a DDR SDRAM, an ESDRAM, a SLDRAM, a DR RAM, and the like. That is to say, the memory in the embodiments of the disclosure is intended to include, but is not limited to, these and any other suitable types of memories.

An embodiment of the disclosure further provides a computer-readable storage medium configured to store a computer program.

In some embodiments, the computer-readable storage medium may be applied to the first communication device in the embodiments of the disclosure, and the computer program implements, when executed by at least one processor, the corresponding processes implemented by the first communication device in the various methods in the embodiments of the disclosure, which is not repeated herein for the sake of brevity.

In some embodiments, the computer-readable storage medium may be applied to the second communication device in the embodiments of the disclosure, and the computer program implements, when executed by at least one processor, the corresponding processes implemented by the second communication device in the various methods in the embodiments of the disclosure, which is not repeated herein for the sake of brevity.

An embodiment of the disclosure further provides a computer program product including a computer program instruction.

In some embodiments, the computer program product may be applied to the first communication device in the embodiments of the disclosure, and the computer program instruction causes a computer to execute the corresponding processes implemented by the first communication device in the various methods in the embodiments of the disclosure, which is not repeated herein for the sake of brevity.

In some embodiments, the computer program product may be applied to the second communication device in the embodiments of the disclosure, and the computer program instruction causes a computer to execute the corresponding processes implemented by the second communication device in the various methods in the embodiments of the disclosure, which is not repeated herein for the sake of brevity.

An embodiment of the disclosure further provides a computer program.

In some embodiments, the computer program may be applied to the first communication device in the embodiments of the disclosure. The computer program, when run on a computer, causes the computer to execute the corresponding processes implemented by the first communication device in the various methods in the embodiments of the disclosure, which is not repeated herein for the sake of brevity.

In some embodiments, the computer program may be applied to the second communication device in the embodiments of the disclosure. The computer program, when run on a computer, causes the computer to execute the corresponding processes implemented by the second communication device in the various methods in the embodiments of the disclosure, which is not repeated herein for the sake of brevity.

It may be appreciated by those skilled in the art that the various example units and algorithm operations described in combination with the embodiments disclosed herein may be implemented in electronic hardware or a combination of computer software and electronic hardware. Whether these functions are performed in hardware or software depends on specific applications and design constraints of the technical scheme. Those skilled may use different methods for specific applications to implement the described functions, but such implementation should not be considered beyond the scope of the disclosure.

It may be clearly appreciated by those skilled in the art that for convenience and conciseness of description, regarding the specific operating processes of the apparatuses and units above, reference may be made to the corresponding processes in the method embodiments above and are not repeated herein.

In the several embodiments provided in the disclosure, it should be understood that the disclosed apparatuses and methods may be implemented by other ways. For example, the apparatus embodiments above are only illustrative. For example, the division of the units is only a logical functional division, and in practice, there may be other division manners. For example, multiple units or components may be combined or integrated into another system, or some features may be ignored or not performed. On the other hand, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs to achieve the objectives of the solutions in the embodiments.

Furthermore, the functional units in the various embodiments of the disclosure may be integrated in one processing unit, or the units may exist physically individually, or two or more units may be integrated in one unit.

The functions may be stored in a computer-readable storage medium if the functions are implemented in form of software functional units and sold or used as stand-alone products. Based on such understanding, the essence of the technical solutions in the disclosure, or the part that contributes to the related art, or part of the technical solutions may be embodied in the form of a software product stored in a storage medium including several instructions, which to enable a computer device (which may be a personal computer, a server, or a network device, etc.) to implement all or part of the operations of the methods described in the various embodiments of the disclosure. The above storage medium includes a Universal Serial Bus (USB) flash drive, a removable hard disk, a Read-Only Memory (ROM), a Random Access Memory (RAM), a magnetic disk, an optical disk, or any other medium that may store program codes.

It should be noted that in the disclosure, terms "include", "contain" or any other variation thereof are intended to encompass non-exclusive inclusion, such that a process, method, article or apparatus including a series of elements includes not only those elements, but also other elements not explicitly listed, or elements inherent to such process, method, article or apparatus. Unless further limited, an element defined by the statement "include one..." does not exclude the existence of other identical elements in the process, method, article, or apparatus that includes the element.

The sequence numbers in the embodiments of the disclosure are for description only and do not represent the superiority or inferiority of the embodiments.

The methods disclosed in the several method embodiments according to the disclosure may be combined arbitrarily without conflict, to obtain new method embodiments.

The features disclosed in the several product embodiments according to the disclosure may be combined arbitrarily without conflict, to obtain new product embodiments.

The features disclosed in the several method or device embodiments according to the disclosure may be combined arbitrarily without conflict, to obtain new method embodiments or device embodiments.

The descriptions above are merely specific embodiments of the disclosure, but the scope of protection of the disclosure is not limited thereto. Any change or replacement readily contemplated by a person skilled in the art within the technical scope disclosed in the disclosure shall fall within the scope of protection of the disclosure. Therefore, the scope of protection of the disclosure shall be subject to the scope of protection of the claims.

## Claims

1. A communication method, applied to a first communication device, and comprising:
transmitting first information to a second communication device, wherein the first information implicitly indicates first trajectory information of the first communication device within a first time period, and the first trajectory information is configured to determine at least one target candidate cell.

2. The method of claim 1, wherein before transmitting the first information to the second communication device, the method further comprises:
obtaining second information, the second information indicating second trajectory information of the first communication device within a second time period; and
determining the first information based on the second information;
wherein a start moment of the first time period is not earlier than a current moment, and an end moment of the second time period is not later than the current moment.

3. The method of claim 2, wherein the second trajectory information comprises location information.

4. The method of claim 3, wherein the second trajectory information further comprises movement speed information and/or movement direction information.

5. The method of any one of claims 2 to 4, wherein determining the first information based on the second information comprises:
processing the second information to determine third information, the third information indicating third trajectory information of the first communication device within the first time period; and
performing obfuscation processing on the third information, to determine the first information.

6. The method of any one of claims 2 to 4, wherein the first information is obtained by performing obfuscation processing on the second information.

7. The method of claim 5 or 6, wherein the obfuscation processing is performed based on a first rule, and the first rule comprises at least one of: a modulo processing rule, a floor rounding rule, or a reference point-based processing rule.

8. The method of any one of claims 2 to 4, wherein determining the first information based on the second information comprises:
performing obfuscation processing on the second information based on a second rule, to determine the first information, wherein the second rule is dynamically determined by the first communication device.

9. The method of claim 8, wherein performing the obfuscation processing on the second information based on the second rule comprises:
performing the obfuscation processing on the second information with a first unit of a first model;
wherein the first unit is obtained by the first communication device partitioning the first model with the second rule, and the second rule is configured to partition the first model to obtain the first unit and a second unit of the first model.

10. The method of claim 8 or 9, further comprising:
transmitting the second rule to the second communication device.

11. The method of any one of claims 8 to 10, wherein the second rule is determined based on at least one of:
remaining available computing power of the first communication device;
available uplink transmission resources over an air interface of the first communication device;
uplink channel quality of the first communication device;
data volume of the first information; or
remaining available energy of the first communication device.

12. The method of claim 1, wherein before transmitting the first information to the second communication device, the method further comprises:
obtaining the first information, wherein the first information comprises at least one of the following from signals transmitted between the first communication device and the second communication device within a third time period: a reference signal receiving power (RSRP), a signal arrival time difference, or a signal arrival angle;
wherein a start moment of the first time period is not earlier than a current moment, and an end moment of the third time period is not later than the current moment.

13. The method of any one of claims 2 to 12, wherein at least one of the first time period, the second time period, or the third time period is determined by the first communication device.

14. The method of claim 13, wherein at least one of a duration of the first time period, a duration of the second time period, or a duration of the third time period is determined based on a movement speed and/or a number of location sampling points of the first communication device.

15. The method of any one of claims 1 to 14, further comprising:
receiving configuration information from the second communication device, wherein the configuration information is configured to indicate the at least one target candidate cell.

16. A communication method, applied to a second communication device, and comprising:
receiving first information from a first communication device, wherein the first information implicitly indicates first trajectory information of the first communication device within a first time period, and the first trajectory information is configured to determine at least one target candidate cell.

17. The method of claim 16, further comprising:
determining, based on the first information, at least one cell associated with the first communication device within the first time period; and
transmitting configuration information to the first communication device, wherein the configuration information is configured to indicate the at least one target candidate cell, and the at least one target candidate cell is one of the at least one cell.

18. The method of claim 17, wherein the first information is obtained by performing obfuscation processing on third information, and the third information indicates third trajectory information of the first communication device within the first time period.

19. The method of claim 17, wherein the first information is obtained by performing obfuscation processing on second information, the second information indicates second trajectory information of the first communication device within a second time period; and a start moment of the first time period is not earlier than a current moment, and an end moment of the second time period is not later than the current moment.

20. The method of claim 19, wherein determining, based on the first information, the at least one cell associated with the first communication device within the first time period comprises:
processing the first information to determine fourth information, the fourth information indicating the first trajectory information of the first communication device within the first time period; and
determining the at least one cell based on the fourth information.

21. The method of claim 19 or 20, wherein the second trajectory information comprises location information.

22. The method of claim 21, wherein the second trajectory information further comprises movement speed information and/or movement direction information.

23. The method of any one of claims 18 to 22, wherein the obfuscation processing is performed based on a first rule, and the first rule comprises at least one of: a modulo processing rule, a floor rounding rule, or a reference point-based processing rule.

24. The method of claim 17, wherein the first information is obtained by performing obfuscation processing on second information based on a second rule; the second rule is dynamically determined by the first communication device, and the second information indicates second trajectory information of the first communication device within a second time period; and a start moment of the first time period is not earlier than a current moment, and an end moment of the second time period is not later than the current moment.

25. The method of claim 24, wherein the first information is obtained by performing the obfuscation processing on the second information with a first unit of a first model; the first unit is obtained by the first communication device partitioning the first model with the second rule, and the second rule is configured to partition the first model to obtain the first unit and a second unit of the first model.

26. The method of claim 25, wherein determining, based on the first information, the at least one cell associated with the first communication device within the first time period comprises:
processing the first information with the second unit to determine fifth information, wherein the fifth information indicates the first trajectory information of the first communication device within the first time period, and the second unit is obtained by the second communication device partitioning the first model with the second rule; and
determining the at least one cell based on the fifth information.

27. The method of claim 26, wherein before determining, based on the first information, the at least one cell associated with the first communication device within the first time period, the method further comprises:
receiving the second rule from the first communication device.

28. The method of any one of claims 24 to 27, wherein the second rule is determined based on at least one of:
remaining available computing power of the first communication device;
available uplink transmission resources over an air interface of the first communication device;
uplink channel quality of the first communication device;
data volume of the first information; or
remaining available energy of the first communication device.

29. The method of claim 17, wherein the first information comprises at least one of the following from signals transmitted between the first communication device and the second communication device within a third time period: a reference signal receiving power (RSRP), a signal arrival time difference, or a signal arrival angle; and
wherein a start moment of the first time period is not earlier than a current moment, and an end moment of the third time period is not later than the current moment.

30. The method of claim 29, wherein determining, based on the first information, the at least one cell associated with the first communication device within the first time period comprises:
processing the first information to determine sixth information, the sixth information indicating second trajectory information of the first communication device within the third time period;
processing the sixth information to determine seventh information, the seventh information indicating the first trajectory information of the first communication device within the first time period; and
determining the at least one cell based on the seventh information.

31. The method of any one of claims 18 to 30, wherein before transmitting the configuration information to the first communication device, the method further comprises:
determining dwell time of the first communication device in each of the at least one cell; and
in a case where the dwell time of the first communication device in a first cell is greater than or equal to a first threshold, configuring the first cell as the at least one target candidate cell, the first cell being one of the at least one cell.

32. The method of any one of claims 19 to 30, wherein at least one of the first time period, the second time period, or the third time period is determined by the first communication device.

33. The method of claim 32, wherein at least one of a duration of the first time period, a duration of the second time period, or a duration of the third time period is determined based on a movement speed and/or a number of location sampling points of the first communication device.

34. A communication apparatus, applied to a first communication device, and comprising:
a first transceiver unit, configured to transmit first information to a second communication device, wherein the first information implicitly indicates first trajectory information of the first communication device within a first time period, and the first trajectory information is configured to determine at least one target candidate cell.

35. A communication apparatus, applied to a second communication device, and comprising:
a second transceiver unit, configured to receive first information from a first communication device, wherein the first information implicitly indicates first trajectory information of the first communication device within a first time period, and the first trajectory information is configured to determine at least one target candidate cell.

36. A communication device, comprising a processor and a memory configured to store a computer program, and the processor being configured to call and run the computer program stored in the memory, to perform the method of any one of claims 1 to 15; or to perform the method of any one of claims 16 to 33.

37. A chip, comprising a processor configured to call and run a computer program from a memory, causing a device equipped with the chip to perform the method of any one of claims 1 to 15; or to perform the method of any one of claims 16 to 33.

38. A computer-readable storage medium, having stored thereon a computer program, and the computer program, when executed by at least one processor, performing the method of any one of claims 1 to 15; or performing the method of any one of claims 16 to 33.

39. A computer program product, comprising a computer program instruction, causing a computer to perform the method of any one of claims 1 to 15; or to perform the method of any one of claims 16 to 33.

40. A computer program, causing a computer to perform the method of any one of claims 1 to 15; or to perform the method of any one of claims 16 to 33.
